# EUROPEAN PATENT APPLICATION

(11) **EP 3 200 041 A1**
(43) Date of publication of application: **02.08.2017**
(21) Application number: 16199085.8
(22) Date of filing: 16.11.2016
(51) Int. Cl.: G05D 7/06

(54) **COMMISIONING FLOW SYSTEM WITH FLOW VERIFICATION PROCEDURE**

(30) Priority: 20.01.2016 DK 201600039
(71) Applicant: Danfoss A/S, 6430 Nordborg (DK)
(72) Inventor: Boden, Sean, 21407 Deutsch Evern (DE); Kelly, John, 6100 Haderslev (DK); Kjeldsteen, Peter Skov, 5500 Middelfart (DK); Thybo, Claus, 8230 Åbyhøj (DK)

(57) **Abstract**

The present system relate to a flow system including flow regulating devices remotely controlled according to settings and where the commissioning of the flow system is done by linking the flow regulating devices and their parameters and settings to a design plan before making the actual physical flow system, and when installed to run a flow verification process to update the design plan settings and parameters to those actually measured.

## Description

The present system relate to a flow system including flow regulating devices remotely controlled according to settings and where the commissioning of the flow system is done by linking the flow regulating devices and their parameters and settings to a design plan before making the actual physical flow system, and when installed to run a flow verification process to update the design plan settings and parameters to those actually measured.

### BACKGROUND

When commissioning a flow system such as a heating system, a HVAC system, cooling system, water based energy generating system like by solar energy, it is preferred that the system is dimensioned in an energy efficient manner. If e.g. valves of the flow system do not operate at their best at the actual conditions, the system will not operate and be regulated efficiently and energy will be lost.

The object of the present invention is to introduce a method and the associated means to be able to commission a flow system operating efficiently.

### SUMMARY OF THE INVENTION

The object is solved in introducing a method to commission a flow system comprising adjustable flow regulating devices (such as valves) being adjustable according to a setting signal received from a controller being in data communication with said flow regulating devices, where the method includes prior to a physically installation of said flow system to establish a design plan with design parameters including a representation of the positioning of the flow regulating devices in the flow system, the theoretical parameters of said flow regulating devices and theoretical design pre-setting(s) of said flow regulating devices linking the theoretical pre-setting(s) to expected flow rate(s) of said fluid in said flow system.

By introducing such a design plan it is possible first to make a theoretical system with the associated devices, e.g. heat exchangers and flow regulating devices like valves, and their pre-settings, such that the system is designed to be operating efficiently, at least according to theoretically calculations.

The system further could include the procedure of transferring the design parameters and / or pre-settings to the controller, these being the controller setting(s).

With these controller pre-settings being the design parameters and pre-settings, when the actual physical flow system have been installed, then the pre-settings can be fine-tuned by starting a flow verification process including a step of circulate a fluid at an expected flow rate according to the design parameter pre-setting(s) and given by a flow generating setting through said flow system, to measure an actual flow rate and compare it to the expected flow rate and updating the controller setting to match the actual flow rate. In this manner, if the actual physical flow system is not operating quite as the expected theoretical calculations of the design plan, the controller settings will be changed to match the actual system,

A natural choice for flow regulation devices is that they are formed arrangements formed of a valve connected to an actuator being in data communication with said controller communicating settings to the actuator, the actuator then adjusting said valve according to the communicated settings.

Often the flow system is feeding a heat transferring fluid to a plural of independent devices, such as e.g. heat exchangers forming the link in a substation to the heating circuits of living spaces like the flats in housings etc., thus the flow system would comprise a plural of branches each conducting a flow of the fluid at an individual flow rate defined by a connected valve and actuator, but where the measured actual flow rate is the total fluid flow rate of the whole flow system.

As a further check that the devices like the flow regulating devices are installed at their correct positions in the flow system, at least some may is equipped with an identification being transferred to the controller during the physical installation of the flow system, the identification linking the device to its theoretical parameters, and where the controller includes a procedure of comparing said device theoretical parameters to those expected at that position according to the design plan parameters stored in the controller and indicating if they do not match. The parameters and settings of the controller and / or design plan thus could be updated accordingly, or the device could be replaced with the correct one.

In order to make a flow verification according to the actual operation of the individual flow regulating devices, the verification process includes the step of closing some of the flow regulating devices keeping only one or a sub-set open and circulate a fluid at an expected flow rate given by the flow generating setting, measure an actual flow rate and comparing it to the expected flow rate according to the controller settings and updating the controller setting to match the actual flow rate.

To ensure all the flow regulating devices are fine-tuned this step may be repeated with different flow regulating devices or sub-sets of flow regulating devices being open and the others closed until all flow regulating devices have been measured according said step.

To ensure the flow regulating device settings are correct over a range of flow rates, in an embodiment the design plan includes the theoretical design plan characteristic curve(s) for the flow regulating devices and where the flow verification process includes the steps of repeating the procedure for a range of different settings of the flow regulating devices to generate actual characteristic curves, these then being compared to the design plan characteristic curve(s) stored in the controller replacing these in the controller when they differs. Sometimes the flow regulating devices are chosen with a regulation characteristic that itself is linear, or is linear seen in combination with other devices like heat delivery through heat exchangers, the verification process includes checking the linearity at least within a given uncertainty and store the data.

Since the openings of valves is setting the flow rate, then in one embodiment wherein the protocol pre-settings includes parameters being theoretical relation of valve opening(s) of the valve(s) to the expected flow rate(s) defined by said opening(s), and when making the physical installation of the flow system, measuring the valve opening of the flow regulating devices and communicating the measurement data to the controller updating the relations to match the measurements where they differs.

This process could run according to the same steps and other described embodiments.

To aid the verification process it may be a process pre-stored in the controller, where the controller automatically runs the flow verification process once initiated.

The commissioning of the flow system thus makes the use of a design plan including the theoretical design parameters of a flow system, where the flow system comprises adjustable flow regulating devices being adjustable according to a setting signal received from a controller, and the design plan comprises design parameters including a representation of the positioning of the flow regulating devices in the flow system, the theoretical parameters of said flow regulating devices and theoretical design pre-setting(s) of said flow regulating devices linking the theoretical pre-setting(s) to expected flow rate(s) of said fluid in said flow system.

The flow system thus is installed according to the design plan established prior to installing the flow system, and a including a controller, where
the flow system comprises adjustable flow regulating devices being adjustable according to a setting signal received from a controller,
and the design plan comprises design parameters including a representation of the positioning of the flow regulating devices in the flow system, the theoretical parameters of said flow regulating devices and theoretical design pre-setting(s) of said flow regulating devices linking the theoretical pre-setting(s) to expected flow rate(s) of said fluid in said flow system,
the controller including data transferred from the design plan.

In one embodiment at least one of the flow regulating devices, optionally all of them, is formed as a control valve comprises a valve element cooperating with a throttling element where the distance of the valve element to the throttling element defines a valve opening, and where said detecting means is adapted to measure the position of the valve element relative to the throttling element indicative of the valve opening.

Since it is well known that flow systems often operate more efficiently when the differential pressures can be kept substantially constant, in one embodiment at least one, optionally all, of the control valves are pressure control valves including the operation of controlling a differential pressure, optionally in addition to being a flow regulating valves.

To ensure the valves to be remotely adjustable remotely controlled actuators are connected to the control valves adapted to move the valve elements relative to the throttling element such as to adjust the flow rate through the valve and / or a set differential pressure.

In an embodiment to be able to operate the valve over a range of different settings, such as under the flow verification process, the controller is adapted individually to adjust the control valves to fully closed, fully opened or any setting there between, means to control a flow generating device at a flow generation setting and adapted circulate a fluid through the flow system and if it further includes means to measure the actual flow rate through the flow system this could be used in the flow verification process if the controller comprises means to compare the actual flow rate to an expected flow rate according to the setting(s) of the control valve(s).

To ensure a sufficiently precise actual flow rate measurement, then in one embodiment the means to measure the flow rate includes one or more valves covering a range of different KV values. This could be either in having one valve with adjustable KV value, or a range of selectable valves with different KV, so that a suitable KV may be selected for the actual flow rate.

### FIGURES

- Fig. 1: A flow system for providing a heat transferring fluid to a plural heat exchanging devices including a controller and flow measuring means.
- Fig. 2: A schematic illustration of a valve with detecting means adapted to measure the opening of the valve. The valve further includes pressure regulating means.
- Fig.3: A schematic illustration of the procedure of using a design plan in the commissioning of a flow system.
- Fig. 4: An illustration of a step in a flow verification process where some valves are open and some closed.
- Fig. 5: An illustration of a step where some different valves are open.

### DETAILED DESCRIPTION OF THE INVENTION

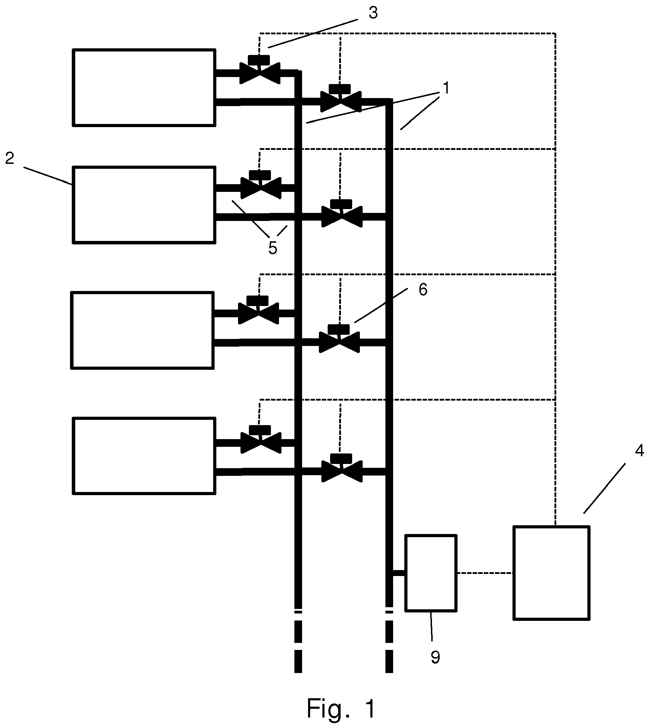

Fig. 1 illustrate part of a flow system (1) comprises devices (2) such as heat exchangers like radiators, floor heating devices, optional cooling devices etc. The devices (2) in one embodiment is heat exchangers forming the heat exchanging connection to a local heating and / or cooling circuit e.g. in a substation. The flow system (1) further comprises adjustable flow regulating devices (3), in the following referred to as valves (3) through other means for regulating flow could alternatively be included. The valves are adjustable according to a setting signal received from a remote controller (4). The setting signal could be transferred wireless or by wire in any manner as it is well known in the art.

The flow system (1) further may comprise a plural of branches (5) each conducting a flow of the fluid at an individual flow rate defined by a connected valve (4) and actuator (6).

Further flow measuring means (9) is connected to the flow system (1). In the illustrated embodiment it is connected to a return line of the flow system (1) thus measuring the total actual flow rate of the fluid. The flow measuring means (9) could be positioned alternatively like at the forward line of the flow system (1) or having one positioned at each of the branches (5) the total actual flow rate being the sum up of all the individual sub-flow rates.

In one embodiment the flow measuring, means could include a string valve, where the flow is obtained by measuring the differential pressure over a known valve KV-value. It is known that string vales e.g. may operate inaccurately when flows reach the lower ranges, and thus in an embodiment the string valve could be such that the KV value manually or automatically may be adjusted to provide accurate flow measurement over a large range. In that manner, when e.g. flow reaches the lower end relative to one KV setting it may be adjusted to a lower setting where the flow rate is well within accurate operation of the valve, and vice verca when the flow rate increases.

In an alternative or additional embodiment a valve configuration is introduced having valves large and small KV values where a suitable one or set of the valves may be chosen to accurately to measure low flow with a high precision. Other measuring devices such as pressure based, optical, vortex sensors, magnetic flow sensors, ultrasonic, Coriolis etc.

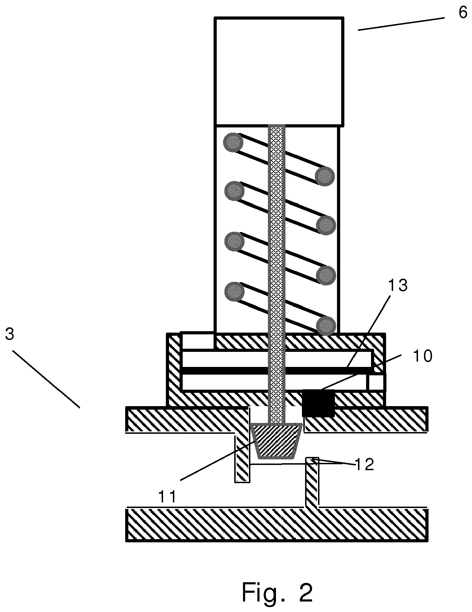

Fig.2 shows one highly simplified embodiment valve (3) that could be used in the present system, the valve (3) comprising a valve element (11) cooperating with a throttling element, or valve seat, (12) where the distance of the valve element (11) to the throttling element (12) defines a valve opening. The illustrated valve further comprises detecting means (10) adapted to measure the position of the valve element (11) relative to the throttling element (12) indicative of the valve opening. Other constructions of valves (3) are available on the marked too, where the actual flow defining opening may be detected by detecting means (10).

In the illustrated embodiment the valve (3) further is a pressure control valve (3) controlling a differential pressure through a differential pressure over a diaphragm or membrane (13) where the opposite sides of the diaphragm (13) is in pressure connection (14a, 14b) to two different positions at the flow system (1). Other constructions of differential pressure valves and valves in general however also exists that just as well may be used in the flow system (1) instead.

An actuator (6) may be connected to the valve (3), such as a remotely controlled actuators (6), adapted to move the valve elements (11) relative to the throttling element (12) such as to adjust the flow rate through the valve and / or a set differential pressure.

When to install the actual physical flow system (1) (see fig. 2) then in an embodiment a design plan (7) firstly is prepared. The design plan includes many parameters of the flow system (1) including some or all of the dimensions of the pipes forming the flow communicating parts of the flow system (1), the theoretical values of the valves (3), optionally linked to the exact type of the (3), such as the theoretical link of the valve settings / openings to the related flow rates, their flow characteristics / characteristic curves, the device (2) including their theoretical flow parameters and flow characteristics optionally linked to the exact type, etc.

The design plan thus is a theoretically designed flow system (1) where its parts are chosen according to an calculation that could be linked to minimize the energy consumption of the system, such that efficient devices (1) and (3) at each position is chosen according to the expected operational conditions at that position. This could be choosing a valve (3) having its best operational range within the expected dominant flow rates and / or differential pressures it is expected to deliver.

The design plan (7) thus includes the theoretical design parameters of the flow system (1) including a representation of the positioning of the devices (2) and / or valves (3) in the flow system (1) linking the theoretical pre-setting(s) to expected flow rate(s) of said fluid in the flow system (1),

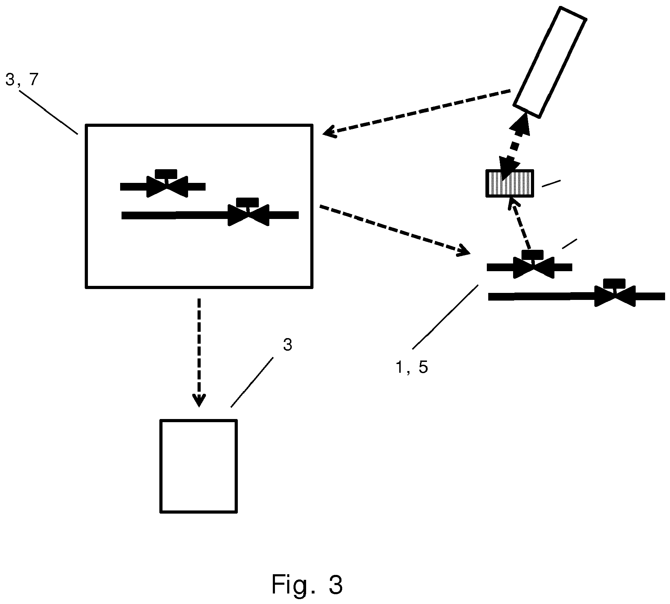

In an embodiment at least some of the devices (2) and flow regulating devices / valves (3) is equipped with an identification (8) (see fig. 3) being transferred to the controller (4) during the physical installation of the flow system (1), the identification (8) linking the devices (2) and (3) to their theoretical parameters, e.g. for the valves (3) being their relation of a given valve setting dictated from the controller (4) to the related flow rate through the valve (3) according to the setting, and / or a given relation of an valve opening to the related flow rate and / or valve setting.

Fig. 3 illustrates part of the actual physical flow system (1, 5), the controller (4) comprising the design plan (7) and the identification (8) being registered and the data send to the controller (4).

The identification could for example including a bar code connected to the valve (3) and / or actuator (6) or their packings, where this is scanned (possible removed first) and the data send to the controller for a given position. The controller (4) includes a procedure of comparing said device (2) and / or valve (3) theoretical parameters as they are stored for this component having this exact identification (code) to those expected to be at that position according to the design plan (7) parameters stored in the controller (4) and indicating if they do not match. Alternatively the identification could be an RFID tag etc.

The design plan (7) could be made separately to the controller (4), or the data could be transferred to it when starting to install the actual physical flow system (1). It could in addition an electronic version include a physical presentation on paper of the diagram of the flow system (1), and in an embodiment the identifications (8) are removed the packing, valve (3) and / or device (2) when installing this exact component and attached to the diagram at its position. The parameters, settings etc. when stored in the controller (4) is referred to as the controller setting(s) or parameters.

Once all components of the flow system (1) are physically installed in an embodiment the flow system (1) undergoes a flow verification process. This could be a stored number of process steps stored in the controller (4) that automatically runs once initiated, e.g. by a person installing the flow system (1).

A first step of the flow verification process for the controller (4) to instruct a flow generating device to generate a fluid flow at an expected flow rate according to the design parameter pre-setting(s) and given by a flow generating setting through said flow system (1), to measure an actual flow rate by flow rate measuring means (9) and compare it to the expected flow rate and updating the controller settings to match the actual flow rate.

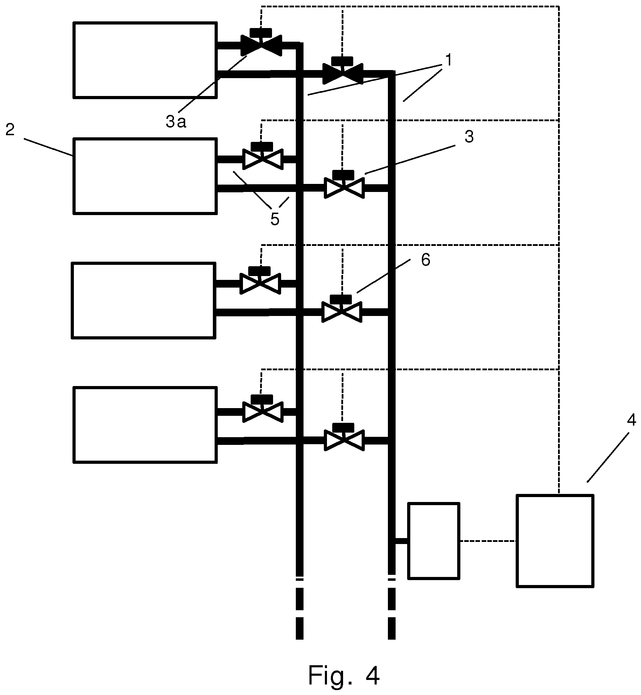

This first step could include a plural of sub-steps, where in a first sub-step only one of the valves (3a) is open (or a sub-set of the valves (3a)), the remaining valves (3) being closed, see fig. 4, and where the total actual flow rate measured thus will correspond to the flow rate through this valve (3) (this sub-set of valves (3)), this controller valve setting(s) thus being updated to match the actual flow rate.

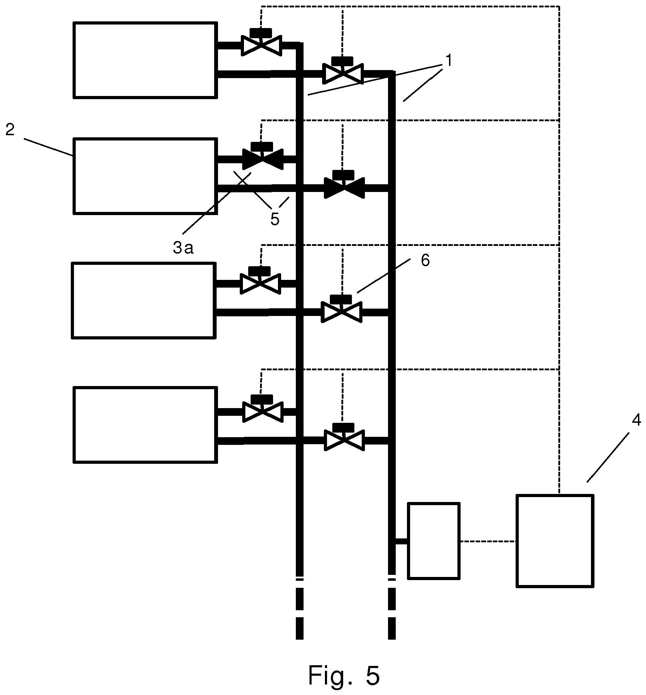

The next sub-steps then could be going through the same sub-step for other of the valves (3), fig. 5, until all the valves (1) have been covered by the sub-steps. In this manner the theoretical design settings as transferred to the controller (4) has been checked and updated as controller settings to match the actual physical flow system (1).

The controller (4) thus comprises the processing means to compare the actual flow rate to an expected flow rate according to the setting(s) of the control valve(s) (3) and to initiate and control all the steps of the verification process. It further comprises the means to store all the data (e.g. measured), parameters and settings.

The controller (4) further would be in data communication connection to the flow generating means able to regulate the generated flow rate.

The controller (4) further would be in data communication connection to the valves (3) capable to have each of the valves (3) set at a range of positions from closed to fully open.

In an embodiment where the design plan (7) includes the includes the theoretical design plan characteristic curve(s) for the valves (1)
and where the flow verification process includes the steps of repeating the procedure for a range of different settings of the valves (1) to generate actual characteristic curves, these then being compared to the design plan characteristic curve(s) stored in the controller (4) replacing these in the controller (4) when they differs.

Sometimes valves (3) are selected such that when cooperating with a device (2) like a heat exchanger, the combined flow of the two (or more) devices will follow a substantially linear flow regulation characteristic curve.

In an embodiment, the verification process in general includes a step of verifying that flow regulation(s) at least substantially follows a specific characteristic curve, such as a linear one.

In an embodiment the verification process further includes performing steps according to the previous described embodiments at a plural of different expected total flow rates. In the same manner it may include performing the steps at a range of flow generating pressures and / or at a plural of different pressure levels.

In an embodiment the verification process include the step of verifying and updating design valve expected opening relations to the actual flows as in the same manner as the previous embodiments, where design pre-settings includes parameters being theoretical relation of valve opening(s) of the valve(s) (3) to the expected flow rate(s) defined by said opening(s), and when making the physical installation of the flow system (1), measuring the valve opening with detecting means (10) of the valves (3) and communicating the measurement data to the controller (4) updating the relations to match the measurements where they differs.

## Claims

1. Method to commission a flow system (1) comprising adjustable flow regulating devices (3) being adjustable according to a setting signal received from a controller (4) being in data communication with said flow regulating devices (3), where the method includes prior to a physically installation of said flow system to establish a design plan (7) with design parameters including a representation of the positioning of the flow regulating devices (3) in the flow system (1), the theoretical parameters of said flow regulating devices (3) and theoretical design pre-setting(s) of said flow regulating devices (3) linking the theoretical pre-setting(s) to expected flow rate(s) of said fluid in said flow system (1).

2. Method according to claim 1, further including the procedure of transferring the design parameters and / or pre-settings to the controller (4) or making them on the controller (4), these being the controller setting(s).

3. Method according to claim 2, where when the actual physical flow system (1) have been installed to start a flow verification process including a step of circulate a fluid at an expected flow rate according to the design parameter pre-setting(s) and given by a flow generating setting through said flow system (1), to measure an actual flow rate and compare it to the expected flow rate and updating the controller setting to match the actual flow rate.

4. Method according to claim 3, wherein at least one of the flow regulating devices (3) is an arrangement formed of a valve (3) connected to an actuator (6) being in data communication with said controller (4) communicating settings to the actuator (6), the actuator then adjusting said valve (3) according to the communicated settings.

5. Method according to claim 4, wherein the flow system (1) further comprises a plural of branches (7) each conducting a flow of the fluid at an individual flow rate defined by a connected valve (3) and actuator (6), but where the measured actual flow rate is the total fluid flow rate of the whole flow system (1).

6. Method according to claim 4 or 5, wherein at least one of the flow regulating devices (3) is equipped with an identification (8) being transferred to the controller (4) during the physical installation of the flow system (1), the identification (8) linking the device (1) to its theoretical parameters, and where the controller (4) includes a procedure of comparing said device (1) theoretical parameters to those expected at that position according to the design plan (7) parameters stored in the controller (4) and indicating if they do not match.

7. Method according to any of the claims 3-6, wherein the verification process includes the step of closing some of the flow regulating devices (3) keeping only one or a sub-set open and circulate a fluid at an expected flow rate given by the flow generating setting, measure an actual flow rate and comparing it to the expected flow rate according to the controller settings and updating the controller setting to match the actual flow rate.

8. Method wherein the step of claim 7 is repeated with different flow regulating devices (3) or sub-sets of flow regulating devices (3) being open and the others closed until all flow regulating devices (3) have been measured according said step.

9. Method according to claim 8, wherein the design plan (7) includes the theoretical design plan characteristic curve(s) for the flow regulating devices (3) and where the flow verification process includes the steps of repeating the procedure for a range of different settings of the flow regulating devices (3) to generate actual characteristic curves, these then being compared to the design plan characteristic curve(s) stored in the controller (4) replacing these in the controller (4) when they differs.

10. Method according to claim 9, wherein at least one of the flow regulating devices (3) is configured theoretically to deliver a linear flow regulation and where the verification process includes checking the linearity at least within a given uncertainty and store the data.

11. Method according to any of the preceding claims 4-10, wherein the protocol pre-settings includes parameters being theoretical relation of valve opening(s) of the valve(s) (1) to the expected flow rate(s) defined by said opening(s), and when making the physical installation of the flow system (1), measuring the valve opening of the flow regulating devices (3) and communicating the measurement data to the controller (4) updating the relations to match the measurements where they differs.

12. Method where the procedure of claim 11 runs according to a similar process as that of claim 7 or 8.

13. Method according to any of the preceding claims 3-11, where the controller automatically runs the flow verification process once initiated.

14. A design plan (7) including the theoretical design parameters of a flow system (1), where the flow system (1) comprises adjustable flow regulating devices (3) being adjustable according to a setting signal received from a controller (4), and the design plan (7) comprises design parameters including a representation of the positioning of the flow regulating devices (3) in the flow system (1), the theoretical parameters of said flow regulating devices (3) and theoretical design pre-setting(s) of said flow regulating devices (e) linking the theoretical pre-setting(s) to expected flow rate(s) of said fluid in said flow system (1),

15. Flow system (1) installed according to the design plan (7) of claim 14 established prior to installing the flow system (1), and comprising a controller (4), where
the flow system (1) comprises adjustable flow regulating devices (3) being adjustable according to a setting signal received from a controller (4),
and the design plan (7) comprises design parameters including a representation of the positioning of the flow regulating devices (3) in the flow system (1), the theoretical parameters of said flow regulating devices (3) and theoretical design pre-setting(s) of said flow regulating devices (3) linking the theoretical pre-setting(s) to expected flow rate(s) of said fluid in said flow system (1),
the controller (4) including data from the design plan (7)

16. Flow system (1) according to claim 15 including a plural of flow regulating devices(3) being valve arrangements each having a control valve (3) capable of defining a valve opening, and detecting means (10) adapted measure the valve opening, where the measured position is associated with an expected flow rate through the control valve (3).

17. Flow system according to claim 16, where at least one control valve (3) comprises a valve element (11) cooperating with a throttling element (12) where the distance of the valve element (11) to the throttling element (12) defines a valve opening, and where said detecting means (10) is adapted to measure the position of the valve element (11) relative to the throttling element (12) indicative of the valve opening.

18. Flow system according to claim 16 or 17, where said control valves (3) are pressure control valves (3) controlling a differential pressure.

19. Flow system according to any of the previous claims 14-18, wherein remotely controlled actuators (6) are connected to the control valves (3) adapted to move the valve elements (11) relative to the throttling element (12) such as to adjust the flow rate through the valve and / or a set differential pressure.

20. Flow system according to claim 18, wherein a controller (4) controls the adjustment of said valve elements (11).

21. Flow system according to claim 20, wherein the controller (4) includes means individually to adjust the control valves (3) to fully closed, fully opened or any setting there between, means to control a flow generating device at a flow generation setting and adapted circulate a fluid through the flow system (1) and means (9) to measure the actual flow rate through the flow system (1).

22. Flow system (1) according to claim 21, where the means (9) to measure the flow rate includes one or more valves covering a range of different KV values.

23. Flow system according to claim 20, 22 or 23, wherein the controller (4) comprises means to compare the actual flow rate to an expected flow rate according to the setting(s) of the control valve(s) (3).

24. Flow system according to claim 22 or 23, wherein the controller (4) comprises a pre-defined flow verification procedure where one or more of the control valves (3) are set at an open position, either fully open or at any position between fully closed and fully open, and the rest of the control valves (3) are set at fully closed, and where the flow generating device is set to circulate a fluid at flow rate given by the flow generating setting, measure the actual flow rate and comparing it to the expected flow rate according to the setting(s) of the control valve(s) (5), and finally to update and store the actual flow rate as the new expected flow rate given the setting(s) of the control valve(s) (5) if they differ.
